# EUROPÄISCHE PATENTANMELDUNG

(11) **EP 4 494 992 A1**
(43) Veröffentlichungstag der Anmeldung: **22.01.2025**
(21) Anmeldenummer: 24187335.5
(22) Anmeldetag: 09.07.2024
(51) Int. Cl.: B62M 19/00

(54) **STROMERZEUGUNGSEINHEIT FÜR EIN FAHRRAD, ANTRIEBSSTRANG UND FAHRRAD**

(30) Priorität: 18.07.2023 DE 102023118950
(71) Anmelder: Ora Drive GmbH, 64372 Ober-Ramstadt (DE)
(72) Erfinder: Erjavec, Miha, 3312 Prebold (SI)
(74) Vertreter: Schaumburg und Partner Patentanwälte mbB

(57) **Zusammenfassung**

Eine Stromerzeugungseinheit (100) für ein Fahrrad (1000) umfasst eine Pedalwelle (102) mit Pedalen (104) und einen elektrischen Generator (128) mit einem Rotor (132) und einem Stator (130), wobei die Drehachse des Rotors (132) mit Parallelversatz zu der Pedalwelle (102) angeordnet ist. Die Stromerzeugungseinheit (100) umfasst zudem ein Getriebe (108, 116), das dazu ausgebildet ist, Drehmoment von der Pedalwelle (102) auf den Rotor (132) des elektrischen Generators (128) zu übertragen. Die Stromerzeugungseinheit (100) hat ferner ein Gehäuse (140), das zumindest den elektrischen Generator (128) und das Getriebe (108, 116) umfasst, und/oder die Drehachse des Rotors (132) ist mit Parallelversatz zu einem angetriebenen Rad des Fahrrades (1000) angeordnet.

## Beschreibung

Die Erfindung betrifft eine Stromerzeugungseinheit für ein Fahrrad. Die Stromerzeugungseinheit umfasst eine Pedalwelle mit Pedalen und einen elektrischen Generator, der von der Pedalwelle angetrieben ist.

Im Bereich der Mikromobilität, insbesondere der Letzten-Meile-Mobilität, spielen Fahrräder mit elektrischen Motoren eine immer größere Rolle. Bei sogenannten Pedelecs unterstützt der elektrische Motor einen Fahrer nur dann, wenn der Fahrer in die Pedale des Pedelecs tritt. Bei sogenannten E-Bikes treibt der elektrische Motor das E-Bike auch dann an, wenn der Fahrer nicht in die Pedale tritt. Insbesondere sind kettenlose elektrisch angetriebene Fahrräder bekannt, bei denen keine Kette zwischen einer Pedalwelle und einem angetriebenen Rad des Fahrrades vorhanden ist.

Aus der US 8,997,910 B2 ist ein kettenloses elektrisch angetriebenes Fahrrad bekannt. Mittels einer Pedalwelle wird ein koaxial zu der Pedalwelle angeordneter elektrischer Generator angetrieben. Elektrische Energie, die durch den elektrischen Generator erzeugt wird, wird einem elektrischen Motor zugeführt, der in der Nabe eines Hinterrades angeordnet ist, um das Hinterrad anzutreiben.

Die DE 10 2020 102 986 A1 offenbart einen Tretgenerator eines Antriebsstranges für ein E-Bike. Der Generator ist koaxial zu einer Pedalwelle angeordnet und mit der Pedalwelle über ein zweistufiges Planetengetriebe verbunden.

US 11,459,060 B2 offenbart ein elektrisch angetriebenes Fahrrad. Das Fahrrad weist einen in einer Nabe eines Hinterrades angeordneten elektrischen Generator auf, der über eine Kette mit einer Pedalwelle verbunden ist und durch diese angetrieben ist.

Aufgabe der Erfindung ist es, eine Stromerzeugungseinheit für ein Fahrrad anzugeben, die besonders kompakt ist und eine hohe Leistungsdichte hat.

Diese Aufgabe wird durch eine Stromerzeugungseinheit mit den Merkmalen des Anspruchs 1 gelöst. Vorteilhafte Weiterbildungen sind in den abhängigen Ansprüchen angegeben.

Die vorgeschlagene Stromerzeugungseinheit für ein Fahrrad umfasst eine Pedalwelle mit Pedalen und einen elektrischen Generator mit einem Rotor und einem Stator, wobei die Drehachse des Rotors mit Parallelversatz zu der Pedalwelle angeordnet ist. Die Stromerzeugungseinheit umfasst zudem ein Getriebe, das dazu ausgebildet ist, Drehmoment von der Pedalwelle auf den Rotor des elektrischen Generators zu übertragen. Die Stromerzeugungseinheit hat ferner ein Gehäuse, das zumindest den elektrischen Generator und das Getriebe umfasst, und/oder die Drehachse des Rotors ist mit Parallelversatz zu einem angetriebenen Rad des Fahrrades angeordnet.

Bei der vorgeschlagenen Stromerzeugungseinheit ist der elektrische Generator mit Parallelversatz zu der Pedalwelle angeordnet. Das Drehmoment der Pedalwelle wird durch das Getriebe auf den Rotor des elektrischen Generators übertragen. Hierdurch wird elektrische Energie zum Antreiben des Fahrrades aus der mechanischen Energie erzeugt, die der Stromerzeugungseinheit über die Pedalwelle zugeführt wird. Zumindest der elektrische Generator und das Getriebe bilden eine bauliche Einheit, die insbesondere durch das Gehäuse umfasst ist. Die Anordnung des elektrischen Generators mit Parallelversatz erlaubt es, die Stromerzeugungseinheit besonders leicht und kompakt auszuführen und damit insbesondere eine hohe Leistungsdichte zu erreichen.

Unter Fahrrad wird in dem vorliegenden Dokument ein zumindest zweirädriges Fahrzeug verstanden, insbesondere aber auch ein Drei- oder Vierrad, d.h. ein mehrspuriges Fahrzeug. Die vorgeschlagene Stromerzeugungseinheit kann insbesondere in einem kettenlosen Fahrrad verwendet werden, bei dem keine Kette zwischen der Pedalwelle und einem angetriebenen Rad des Fahrrads angeordnet ist. Bei einem solchen kettenlosen Fahrrad kann das angetriebene Rad beispielsweise durch einen elektrischen Motor angetrieben werden, der in einer Nabe des angetriebenen Rades oder einem Rahmen des Fahrrrades angeordnet ist und der durch die Stromerzeugungseinheit direkt oder indirekt mit elektrischer Energie versorgt wird.

Bei dem elektrischen Generator kann es sich sowohl um einen Innenläufer als auch um einen Außenläufer handeln. Der elektrische Generator ist insbesondere eine Drehstrom-Asynchronmaschine, ein bürstenloser Gleichstrommotor, ein Permanentmagnet-Synchronmotor oder ein Scheibenläufermotor, insbesondere ein Scheibenläufer-Permanentmagnet-Synchronmotor. Das Getriebe kann insbesondere eine Anordnung von Zahnrädern, Riemen und/oder Ketten umfassen, um das Drehmoment von der Pedalwelle auf den Rotor zu übertragen. Bevorzugte Ausgestaltungen des Getriebes sind im Folgenden im Zusammenhang mit Ausführungsformen beschrieben. Die Pedalwelle kann zumindest teilweise von dem Gehäuse mit umfasst sein.

Bei einer Ausführungsform umfasst das Getriebe zumindest eine erste Getriebestufe, die von der Pedalwelle antreibbar ist. Vorzugsweise hat die erste Getriebestufe ein Übersetzungsverhältnis von 1 oder kleiner als 1, d.h. die Generatordrehzahl ist größer als die Drehzahl der Pedalwelle (Übersetzung ins Schnelle). Die erste Getriebestufe ist im Folgenden im Zusammenhang mit weiteren Ausführungsformen näher beschrieben.

Bei einer weiteren Ausführungsform umfasst die erste Getriebestufe ein Zahnradgetriebe, insbesondere ein Stirnradgetriebe oder ein Schrägstirnradgetriebe. Vorzugsweise ist zumindest ein Zahnrad der ersten Getriebestufe koaxial zu der Pedalwelle angeordnet. Das Zahnradgetriebe ist mechanisch besonders einfach und erlaubt eine schlupffreie Übertragung des Drehmomentes von der Pedalwelle weg. Dies erlaubt es der Stromerzeugungseinheit, besonders effizient zu arbeiten.

Bei einer weiteren Ausführungsform umfasst die erste Getriebestufe ein Kettengetriebe oder Riemengetriebe. Die erste Getriebestufe umfasst insbesondere ein Zahnrad, das koaxial zu der Pedalwelle angeordnet ist, oder eine Riemenscheibe, die koaxial zu der Pedalwelle angeordnet ist. Kettengetriebe und Riemengetriebe sind geräuschärmer als beispielsweise ein Zahnradgetriebe. Die Stromerzeugungseinheit kann besonders geräuscharm betrieben werden.

Bei einer weiteren Ausführungsform umfasst das Getriebe eine zweite Getriebestufe, die von der ersten Getriebestufe antreibbar ist und dazu ausgebildet ist, den Rotor des Generators anzutreiben. Insbesondere weist die zweite Getriebestufe eine Ausgangswelle auf, die den Rotor des elektrischen Generators antreibt. Vorzugsweise hat die zweite Getriebestufe ein Übersetzungsverhältnis kleiner als 1, d.h. die Generatordrehzahl ist größer als die Drehzahl der Pedalwelle. Die zweite Getriebestufe ist im Folgenden im Zusammenhang mit weiteren Ausführungsformen näher beschrieben. Es können weitere Getriebestufen und/oder Laufräder zwischen der ersten Getriebestufe und der zweiten Getriebestufe angeordnet sein.

Bei einer weiteren Ausführungsform umfasst die zweite Getriebestufe ein Zahnradgetriebe, insbesondere ein Stirnradgetriebe oder ein Schrägstirnradgetriebe. Vorzugsweise ist zumindest ein Zahnrad der zweiten Getriebestufe koaxial zu der Drehachse des Rotors angeordnet und/oder mit der Ausgangswelle der zweiten Getriebestufe verbunden. Das Zahnradgetriebe ist mechanisch besonders einfach und erlaubt eine schlupffreie Übertragung des Drehmomentes an den Rotor des elektrischen Generators. Dies erlaubt es der Stromerzeugungseinheit, den elektrischen Generator besonders effizient zu betreiben.

Bei einer weiteren Ausführungsform umfasst die zweite Getriebestufe ein Planetengetriebe. Insbesondere umfasst das Planetengetriebe einen Planetenträger, der von der ersten Getriebestufe angetrieben ist, mindestens einen, vorzugsweist mindestens zwei, Planeten, ein Hohlrad und ein Sonnenrad, wobei das Hohlrad drehfest angeordnet ist und das Sonnenrad dazu ausgebildet ist, den Rotor des Generators anzutreiben, oder wobei das Sonnenrad drehfest angeordnet ist und das Hohlrad dazu ausgebildet ist, den Rotor des Generators anzutreiben. Vorzugsweise treibt die erste Getriebestufe den Planetenträger direkt an. Das Planetengetriebe, auch Umlaufrädergetriebe genannt, ist ein besonders kompaktes Getriebe, das ein hohes Übersetzungsverhältnis aufweisen kann. Hierdurch kann die Stromerzeugungseinheit noch kompakter ausgeführt werden. Alternativ kann der Planetenträger drehfest angeordnet sein. Bei einer solchen Ausführungsform ist insbesondere das Hohlrad durch die erste ersten Getriebestufe angetrieben und das Sonnenrad treibt den Rotor an. Bei einer weiteren alternativen Ausführungsform kann die zweite Getriebestufe eines der folgenden Getriebe umfassen: ein Zykloidgetriebe, ein Wellgetriebe (harmonic drive) oder ein Wolfrom-Getriebe.

Bei einer weiteren Ausführungsform weist das Getriebe ein Übersetzungsverhältnis von größer als 1, bevorzugt 1/5 oder kleiner als 1/5, besonders bevorzugt 1/3 oder kleiner als 1/3, auf. Vorzugsweise ist das Übersetzungsverhältnis größer oder gleich 1/1200. Dabei ist die Pedalwelle der Antrieb und der Rotor des elektrischen Generators der Abtrieb und das Übersetzungsverhältnis wird verstanden als der Quotient aus der Drehzahl des Antriebs durch die Drehzahl des Abtriebs. Das Übersetzungsverhältnis des Getriebes sorgt also dafür, dass die Generatordrehzahl größer als die Drehzahl der Pedalwelle ist. Die vorgenannten Übersetzungsverhältnisse erlauben es, den elektrischen Generator bei einer optimalen Drehzahl zu betreiben. Dies erhöht die Effizienz mit der die Stromerzeugungseinheit elektrische Energie aus der mechanischen Energie erzeugen kann, die der Stromerzeugungseinheit über die Pedalwelle zugeführt wird.

Bei einer weiteren Ausführungsform umfasst die Stromerzeugungseinheit eine Kupplung, die dazu ausgebildet ist, das Getriebe an die Pedalwelle zu kuppeln. Die Kupplung ist vorzugsweise koaxial zu der Pedalwelle angeordnet. Die Kupplung ist eine passive Kupplung oder eine aktorgesteuerte Kupplung. Die passive Kupplung ist insbesondere ein Freilauf oder eine Ratsche und verhindert, dass die Pedalwelle angetrieben wird. Die aktorgesteuerte Kupplung wird auch als eine aktive Kupplung bezeichnet und ermöglicht es, das Getriebe und die Pedalwelle zu trennen, um zu verhindern, dass die Pedalwelle angetrieben wird.

Bei einer weiteren Ausführungsform umfasst die Stromerzeugungseinheit eine Steuereinheit, die dazu ausgebildet ist, zumindest den elektrischen Generator zu steuern. Alternativ oder zusätzlich ist die Stromerzeugungseinheit mit einer externen Steuereinheit verbindbar, die dazu ausgebildet ist, zumindest den elektrischen Generator zu steuern. Die Steuereinheit umfasst vorzugsweise einen Frequenzumrichter, der dazu ausgebildet ist, aus der von dem elektrischen Generator erzeugten Wechselspannung eine Gleichspannung zu erzeugen. Dies erlaubt es der Stromerzeugungseinheit einen Gleichstrommotor mit elektrischer Energie zu versorgen, oder einen Energiespeicher des Fahrrades zu laden, beispielsweise Batterien oder Kondensatoren zu laden. Die Steuereinheit ist vorzugsweise in dem Gehäuse der Stromerzeugungseinheit angeordnet.

Bei einer weiteren Ausführungsform umfasst die Stromerzeugungseinheit zumindest einen Rotationssensor, der derart angeordnet und dazu ausgebildet ist, eine Rotorposition, eine Rotationsgeschwindigkeit und/oder eine Rotationsrichtung des Rotors des elektrischen Generators und/oder der Pedalwelle zu messen, der Messung entsprechende Messdaten zu erzeugen und an die Steuereinheit zu übermitteln. Bei einer alternativen Ausführungsform ist der Rotationssensor mit einer externen Steuereinheit verbindbar und dazu ausgebildet, die Messdaten an die externe Steuereinheit zu übermitteln. Der Rotationssensor ist vorzugsweise ein Hall-Sensor. Auf Grundlage der Rotorposition, der Rotationsgeschwindigkeit und/oder der Rotationsrichtung des elektrischen Generators und/oder der Pedalwelle kann ein elektrischer Motor des Fahrrades angesteuert werden, beispielsweise derart, dass die Drehzahl des elektrischen Motors proportional zu der Rotationsgeschwindigkeit des elektrischen Generators bzw. der Pedalwelle ist. Dies sorgt für ein natürliches Tretgefühl bei einem kettenlosen Fahrrad, bei dem keine mechanische Verbindung zwischen der Pedalwelle und dem angetrieben Rad besteht.

Die Erfindung betrifft zudem einen Antriebsstrang für ein Fahrrad umfassend die vorbeschriebene Stromerzeugungseinheit und einen elektrischen Motor, der zumindest von der Stromerzeugungseinheit antreibbar ist. Die Stromerzeugungseinheit kann den elektrischen Motor direkt antreiben. Alternativ oder zusätzlich kann der Antriebsstrang einen Energiespeicher aufweisen, der durch die Stromerzeugungseinheit aufladbar ist. Die in dem Energiespeicher gespeicherte elektrische Energie kann dann dazu verwendet werden, den elektrischen Motor anzutreiben. Der Energiespeicher umfasst beispielsweise Akkumulatoren, Batterien und/oder Kondensatoren, insbesondere Superkondensatoren (sog. Supercaps).

Der Antriebsstrang hat dieselben Vorteile wie die beanspruchte Stromerzeugungseinheit. Insbesondere kann der Antriebsstrang mit den Merkmalen der auf die Stromerzeugungseinheit gerichteten abhängigen Ansprüche weitergebildet werden. Ferner kann die oben beschriebene Stromerzeugungseinheit mit den Merkmalen weitergebildet werden, die in diesem Dokument im Zusammenhang mit dem Antriebsstrang beschrieben sind.

Der Antriebsstrang kann ferner eine Ausgangswelle umfassen, die dazu ausgebildet ist, mechanische Energie an das angetriebene Rad des Fahrrades zu übertragen. Insbesondere kann die Ausgangswelle direkt oder über ein Getriebe durch die Pedalwelle angetrieben sein. Alternativ kann die Ausgangswelle auch durch den elektrischen Generator angetrieben sein, wenn dieser als ein elektrischer Motor betrieben wird. Hierzu kann insbesondere eine Kupplung zwischen dem elektrischen Generator und der Ausgangswelle angeordnet sein, so dass die Ausgangswelle von dem elektrischen Generator entkoppelt werden kann, wenn dieser nicht als elektrischer Motor betrieben wird. Die Ausgangswelle kann koaxial, parallel oder in einem beliebigen anderen Winkel zur Pedalwelle angeordnet sein. Vorzugsweise weist die Ausgangswelle ein Zahnrad auf und ist über das Zahnrad und eine Kette mit dem angetriebenen Rad des Fahrrades verbunden. Bei einer solchen Ausführungsform kann insbesondere eine aktorgesteuerte Kupplung verwendet werden, um den elektrischen Generator von der Pedalwelle zu entkoppeln, wenn das Fahrrad in einen rein pedalgetriebenen Modus geschaltet wird. Dies verhindert eine unnötige Belastung, wenn das Fahrrad nur mit den Pedalen angetrieben wird.

Die Erfindung betrifft ferner ein Fahrrad, insbesondere ein kettenloses Fahrrad, umfassend den vorbeschriebenen Antriebsstrang, wobei der elektrische Motor derart angeordnet und dazu ausgebildet ist, zumindest ein Rad des Fahrrades anzutreiben.

Das Fahrrad hat dieselben Vorteile wie die beanspruchte Stromerzeugungseinheit und der beanspruchte Antriebsstrang. Insbesondere kann das Fahrrad mit den Merkmalen der auf die Stromerzeugungseinheit gerichteten abhängigen Ansprüche weitergebildet werden. Ferner kann die oben beschriebene Stromerzeugungseinheit mit den Merkmalen weitergebildet werden, die in diesem Dokument im Zusammenhang mit dem Fahrrad beschrieben sind.

Ausführungsbeispiele der Erfindung werden im Folgenden anhand der Figuren näher erläutert. Darin zeigen:
- Figur 1: in schematischer Darstellung eine Stromerzeugungseinheit für ein Fahrrad gemäß einem ersten Ausführungsbeispiel;
- Figur 2: in schematischer Darstellung eine Stromerzeugungseinheit für das Fahrrad gemäß einem zweiten Ausführungsbeispiel;
- Figur 3: in schematischer Darstellung eine Stromerzeugungseinheit für das Fahrrad gemäß einem dritten Ausführungsbeispiel;
- Figur 4: in schematischer Darstellung eine Stromerzeugungseinheit für das Fahrrad gemäß einem vierten Ausführungsbeispiel;
- Figur 5: in schematischer Darstellung eine Stromerzeugungseinheit für das Fahrrad gemäß einem fünften Ausführungsbeispiel;
- Figur 6: in schematischer Darstellung eine Stromerzeugungseinheit für das Fahrrad gemäß einem sechsten Ausführungsbeispiel;
- Figur 7: in schematischer Darstellung eine Stromerzeugungseinheit für das Fahrrad gemäß einem siebten Ausführungsbeispiel;
- Figur 8: in schematischer Darstellung eine Stromerzeugungseinheit für das Fahrrad gemäß einem achten Ausführungsbeispiel;
- Figur 9: in schematischer Darstellung eine Stromerzeugungseinheit für das Fahrrad gemäß einem neunten Ausführungsbeispiel; und
- Figur 10: in schematischer Darstellung das Fahrrad gemäß einem Ausführungsbeispiel.

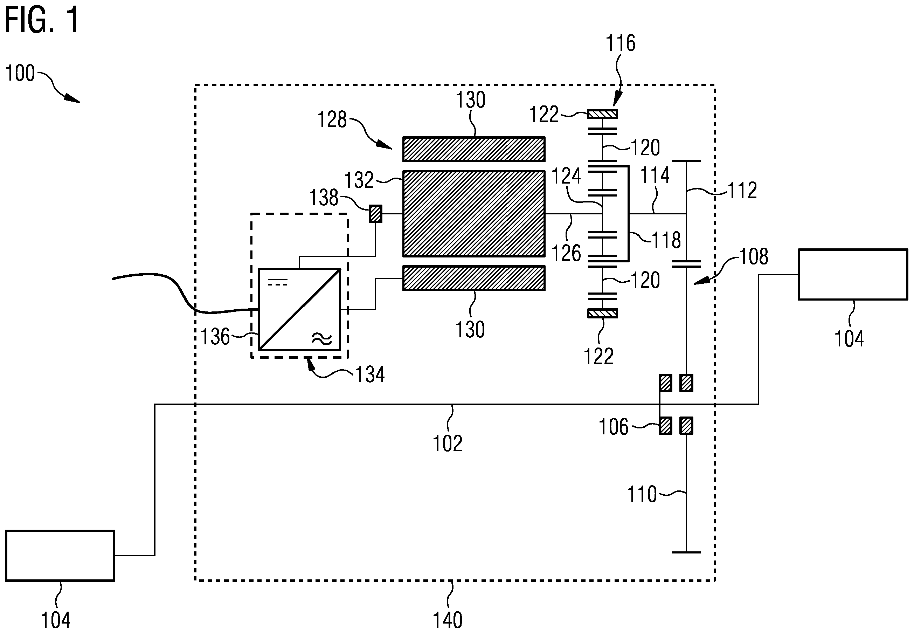

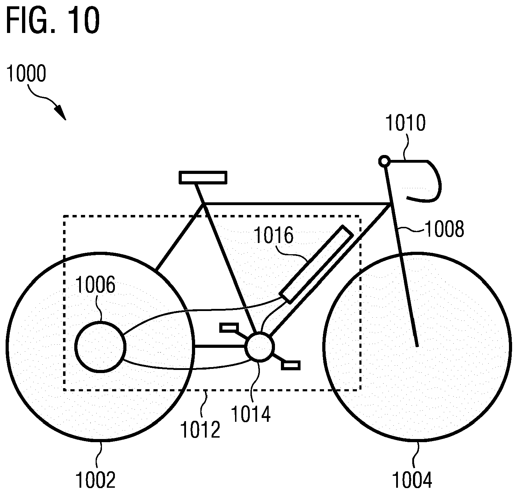

Figur 1 zeigt in schematischer Darstellung eine Stromerzeugungseinheit 100 für ein Fahrrad 1000 (vgl. Figur 10) gemäß einem ersten Ausführungsbeispiel.

Die Stromerzeugungseinheit 100 umfasst eine Pedalwelle 102 mit Pedalen 104. Mit Hilfe der Pedale 104 kann ein Nutzer durch Treten die Pedalwelle 102 antreiben und ein Drehmoment erzeugen. Die Pedalwelle 102 ist in dem gezeigten Ausführungsbeispiel durch eine passive Kupplung 106, beispielsweise einen Freilauf oder eine Ratsche, mit einer ersten Getriebestufe 108 verbunden. Die Kupplung 106 ist in den gezeigten Ausführungsbeispiel koaxial zu der Pedalwelle 102 angeordnet. Über die Kupplung 106 wird das Drehmoment von der Pedalwelle 102 an die erste Getriebestufe 108 übertragen. Gleichzeitig verhindert die Kupplung 106, dass die Pedalwelle 102 angetrieben wird.

Die erste Getriebestufe 108 ist rein beispielhaft als ein Zahnradgetriebe mit zwei Zahnrädern 110, 112 ausgebildet. Ein erstes Zahnrad 110 der ersten Getriebestufe 108 ist koaxial zu der Pedalwelle 102 angeordnet und über die Kupplung 106 mit der Pedalwelle 102 verbunden. Das erste Zahnrad 110 der ersten Getriebestufe 108 steht ferner mit einem zweiten Zahnrad 112 der ersten Getriebestufe 108 im Eingriff. Das zweite Zahnrad 112 ist kleiner als das erste Zahnrad 110, d.h. die erste Getriebestufe 108 hat ein Übersetzungsverhältnis von kleiner als 1. Das zweite Zahnrad 112 weist ferner eine Ausgangswelle 114 auf, über welche die erste Getriebestufe 108 mit einer zweiten Getriebestufe 116 verbunden ist.

Die zweite Getriebestufe 116 ist rein beispielhaft als ein Planetengetriebe ausgebildet. Die zweite Getriebestufe 116 umfasst einen Planetenträger 118, auch Steg genannt, der mit der Ausgangswelle 114 der ersten Getriebestufe 108 verbunden ist. Der Planetenträger 118 treibt in dem gezeigten Ausführungsbeispiel zwei Planeten 120 der zweiten Getriebestufe 116 an, die jeweils mit einem Hohlrad 122 und einem Sonnenrad 124 der zweiten Getriebestufe 116 im Eingriff stehen. Bei dem in Figur 1 gezeigten Ausführungsbeispiel ist das Hohlrad 122 drehfest angeordnet und das Sonnenrad 124 mit einer Ausgangswelle 126 der zweiten Getriebestufe verbunden. Die Ausgangswelle 126 der zweiten Getriebestufe 116 ist achsgleich mit der Ausgangswelle 114 der ersten Getriebestufe 108 und mit Parallelversatz zu der Pedalwelle 102 angeordnet. Durch eine Drehung des Planetenträgers 118 werden die Planeten 120 angetrieben und kreisen entlang des drehfesten Hohlrades 122 um das Sonnenrad 124. Durch die Bewegung der Planeten 120 wird wiederum das Sonnenrad 124 und damit die Ausgangswelle 126 der zweiten Getriebestufe 116 angetrieben.

Die Stromerzeugungseinheit 100 umfasst einen elektrischen Generator 128 mit einem Stator 130 und einem Rotor 132, der rein beispielhaft als ein Innenläufer ausgebildet ist. Der Rotor 132 des elektrischen Generators 128 ist mit Parallelversatz zu der Pedalwelle 102 angeordnet und wird durch die Ausgangswelle 126 der zweiten Getriebestufe 116 angetrieben. Durch die erste Getriebestufe 108 und die zweite Getriebestufe 116 ist ein Getriebe gebildet, das Drehmoment von der Pedalwelle 102 auf den Rotor 132 des elektrischen Generators 128 überträgt. Durch den elektrischen Generator 128 wird somit mechanische Energie, die durch Treten der Pedale 104 erzeugt wird, in elektrische Energie umgewandelt, die zum Betreiben eines elektrischen Motors 1006 oder zum Laden eines Energiespeichers 1016 des Fahrrades 1000 verwendet werden kann (vgl. Figur 10).

Eine Steuereinheit 134 der Stromerzeugungseinheit 100 ist dazu ausgebildet, den elektrischen Generator 128 zu steuern. In dem gezeigten Ausführungsbeispiel umfasst die Steuereinheit 134 einen Frequenzumrichter 136, um die von dem elektrischen Generator 128 erzeugte Wechselspannung in eine Gleichspannung umzuwandeln. Ein Rotationssensor 138 der Stromerzeugungseinheit 100 ist mit der Steuereinheit 134 verbunden und derart angeordnet, dass der Rotationssensor 138 die Rotationsgeschwindigkeit und/oder die Rotationsrichtung des Rotors 132 messen kann. Der Rotationssensor 138 erzeugt Messdaten, die der gemessenen Rotationsgeschwindigkeit und/oder Rotationsrichtung des Rotors 132 entsprechen und übermittelt diese an die Steuereinheit 134. Auf Grundlage der Messdaten kann beispielsweise der elektrische Motor 1006 des Fahrrades 1000 derart angesteuert werden, dass eine Motordrehzahl proportional zu der Drehzahl des Rotors 132 ist.

Bei der in Figur 1 gezeigten Ausführungsform sind das Getriebe 108, 116, der elektrische Generator 128, die Steuereinheit 134, der Rotationssensor 138 und zumindest ein Teil der Pedalwelle 102 in einem Gehäuse 140 angeordnet. Die Stromerzeugungseinheit 100 bildet so eine kompakte bauliche Einheit mit einer hohen Leistungsdichte. Die in Figur 1 gezeigte Ausführungsform hat ein Gesamtübersetzungsverhältnis (i = Pedalwellendrehzahl/Generatordrehzahl) von kleiner als 1/5, mit einem Spitzendrehmoment (maximales Drehmoment an der Pedalwelle 102) von mehr als 20 Nm und mit einem reduzierten Massenträgheitsmoment (an der Pedalwelle 102) von größer als 0,00125 kgm².

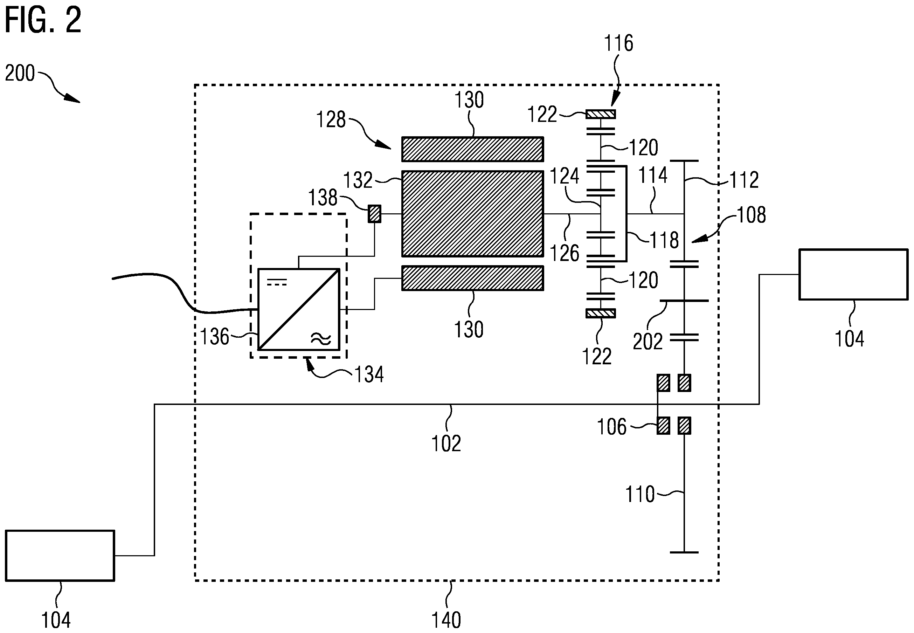

Figur 2 zeigt in schematischer Darstellung eine Stromerzeugungseinheit 200 für das Fahrrad 1000 gemäß einem zweiten Ausführungsbeispiel.

Die Stromerzeugungseinheit 200 gemäß Figur 2 unterscheidet sich von der Stromerzeugungseinheit 100 gemäß Figur 1 darin, dass die erste Getriebestufe 108 ein Zwischenrad 202 aufweist. Dies erlaubt es, Zahnräder mit kleinerem Durchmesser für die erste Getriebestufe 108 zu verwenden. Hierdurch kann die Stromerzeugungseinheit 200 noch kompakter ausgeführt werden.

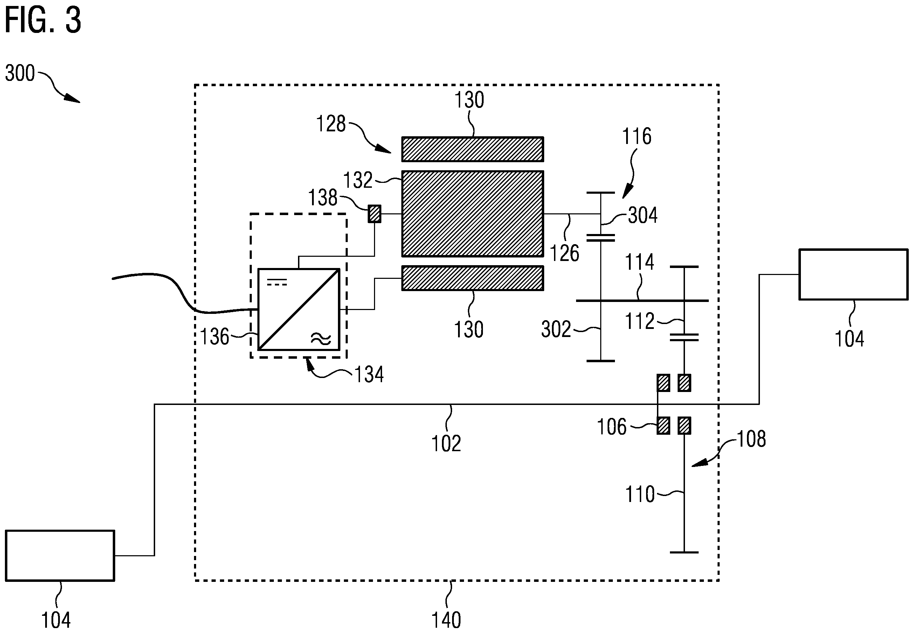

Figur 3 zeigt in schematischer Darstellung eine Stromerzeugungseinheit 300 für das Fahrrad 1000 gemäß einem dritten Ausführungsbeispiel.

Die Stromerzeugungseinheit 300 gemäß Figur 3 unterscheidet sich von der Stromerzeugungseinheit 100 gemäß Figur 1 darin, dass die zweite Getriebestufe 116 als ein Zahnradgetriebe ausgeführt ist. Die Ausgangswelle 114 der ersten Getriebestufe 108 treibt ein erstes Zahnrad 302 der zweiten Getriebestufe 116 an. Das erste Zahnrad 302 der zweiten Getriebestufe 116 steht mit einem zweiten Zahnrad 304 der zweiten Getriebestufe 116 im Eingriff. Das zweite Zahnrad 304 der zweiten Getriebestufe 116 ist mit der Ausgangswelle 126 der zweiten Getriebestufe 116 verbunden, die wiederum den Rotor 132 des elektrischen Generators 128 antreibt. Das zweite Zahnrad 304 der zweiten Getriebestufe 116 ist kleiner als das erste Zahnrad 302 der zweiten Getriebestufe 116, d.h. die zweite Getriebestufe 116 hat ein Übersetzungsverhältnis von kleiner als 1.

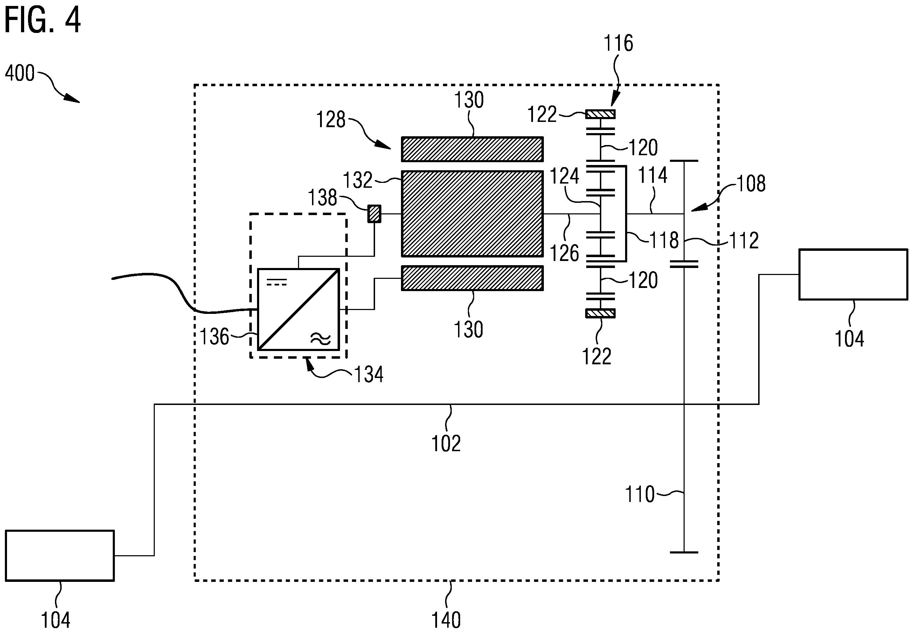

Figur 4 zeigt in schematischer Darstellung eine Stromerzeugungseinheit 400 für das Fahrrad 1000 gemäß einem vierten Ausführungsbeispiel.

Die Stromerzeugungseinheit 400 gemäß Figur 4 unterscheidet sich von der Stromerzeugungseinheit 100 gemäß Figur 1 darin, dass keine Kupplung zwischen der Pedalwelle 102 und der ersten Getriebestufe 108 angeordnet ist. Das erste Zahnrad 110 der ersten Getriebestufe 108 ist direkt mit der Pedalwelle 102 verbunden. Durch den Verzicht auf die Kupplung 106 weist die Stromerzeugungseinheit 400 gemäß Figur 4 weniger bewegliche Elemente auf und ist einfacher ausgeführt.

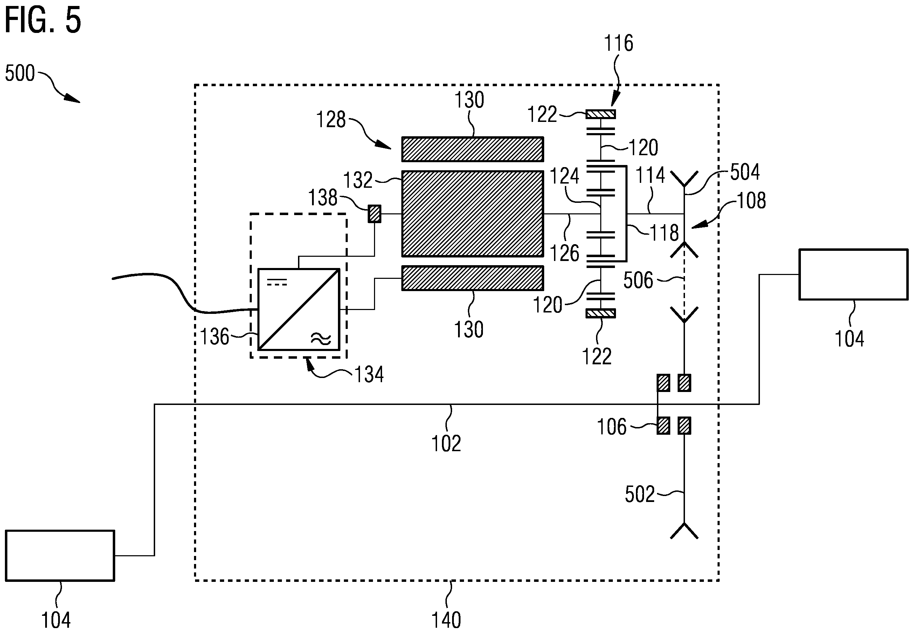

Figur 5 zeigt in schematischer Darstellung eine Stromerzeugungseinheit 500 für das Fahrrad 1000 gemäß einem fünften Ausführungsbeispiel.

Die Stromerzeugungseinheit 500 gemäß Figur 5 unterscheidet sich von der Stromerzeugungseinheit 100 gemäß Figur 1 darin, dass die erste Getriebestufe 108 durch ein Kettengetriebe gebildet ist. Ein erstes Ritzel 502 der ersten Getriebestufe 108 ist koaxial zu der Pedalwelle 102 angeordnet und über die Kupplung 106 mit der Pedalwelle 102 verbunden. Ein zweites Ritzel 504 der ersten Getriebestufe 108 ist über die Ausgangswelle 114 der ersten Getriebestufe 108 mit dem Planetenträger 118 der zweiten Getriebestufe 116 verbunden und koaxial zu der Drehachse des Rotors 132 angeordnet. Das erste Ritzel 502 ist mit dem zweiten Ritzel 504 über eine Kette 506 verbunden. Bei einem alternativen Ausführungsbeispiel kann die erste Getriebestufe 108 auch durch ein Riemengetriebe gebildet sein, bei dem die beiden Ritzel 502, 504 durch Riemenscheiben und die Kette 506 durch einen Riemen ersetzt sind. Sowohl Kettengetriebe als auch Riemengetriebe können geräuschärmer betrieben werden als ein Zahnradgetriebe.

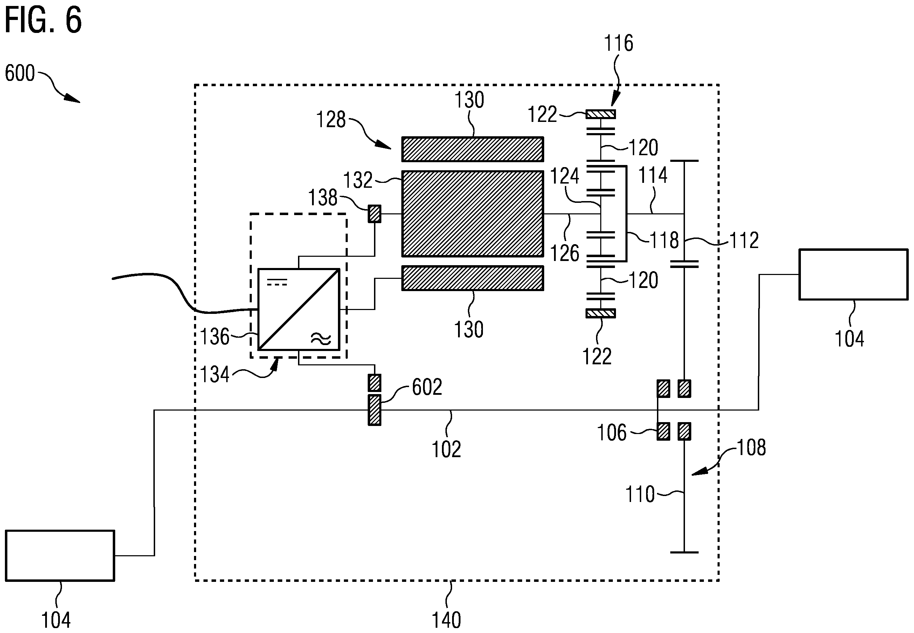

Figur 6 zeigt in schematischer Darstellung eine Stromerzeugungseinheit 600 für das Fahrrad 1000 gemäß einem sechsten Ausführungsbeispiel.

Die Stromerzeugungseinheit 600 gemäß Figur 6 unterscheidet sich von der Stromerzeugungseinheit 100 gemäß Figur 1 darin, dass ein zweiter Rotationssensor 602 an der Pedalwelle 102 angeordnet ist. Der zweite Rotationssensor 602 ist dazu ausgebildet, die Rotationsgeschwindigkeit und/oder die Rotationsrichtung der Pedalwelle 102 zu messen, der Messung entsprechende Messdaten zu erzeugen und an die Steuereinheit 134 der Stromerzeugungseinheit 600 zu übermitteln. Auf Grundlage der Messdaten des zweiten Rotationssensors 602 kann beispielsweise die Kupplung 106 gesteuert werden. Alternativ oder zusätzlich kann der elektrische Motor 1006 des Fahrrades 1000 derart angesteuert werden, dass eine Motordrehzahl proportional zu der Drehzahl der Pedalwelle 102 ist. Dies sorgt für ein besonders natürliches Tretgefühl bei einem kettenlosen Fahrrad. Alternativ oder zusätzlich zu dem zweiten Rotationssensor 602 kann die Stromerzeugungseinheit 600 auch einen Drehmomentsensor aufweisen, der dazu ausgebildet ist, ein Drehmoment der Pedalwelle 102 zu messen, der Messung entsprechende Messdaten zu erzeugen und an die Steuereinheit 134 der Stromerzeugungseinheit 600 zu übermitteln.

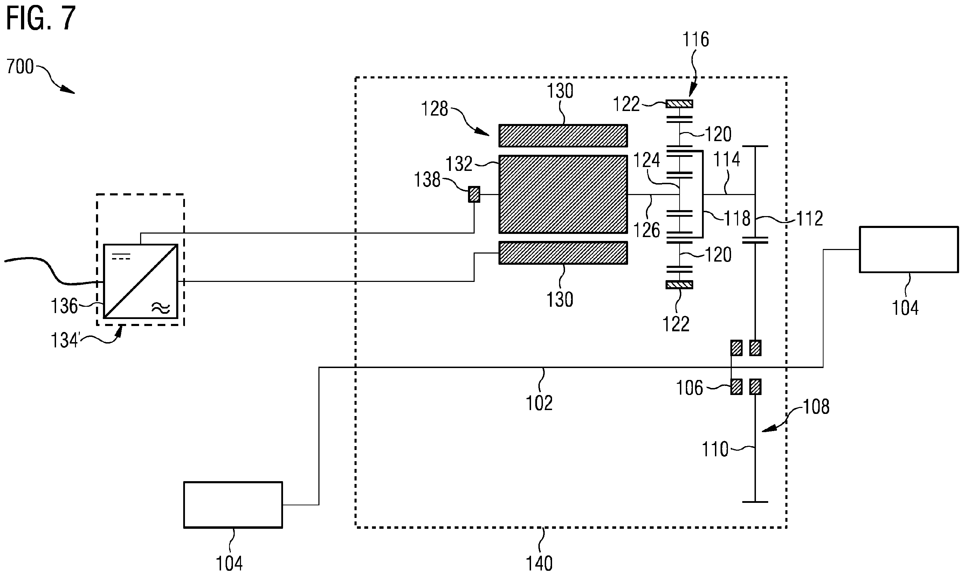

Figur 7 zeigt in schematischer Darstellung eine Stromerzeugungseinheit 700 für das Fahrrad 1000 gemäß einem siebten Ausführungsbeispiel.

Die Stromerzeugungseinheit 700 gemäß Figur 7 unterscheidet sich von der Stromerzeugungseinheit 100 gemäß Figur 1 darin, dass die Steuereinheit 134' außerhalb des Gehäuses 140 angeordnet ist. Bei der Steuereinheit 134' handelt es sich insbesondere um eine zentrale Steuereinheit des Fahrrades 1000, die neben dem elektrischen Generator 128 noch weitere Funktionseinheiten des Fahrrades 1000 steuert, beispielsweise den elektrischen Motor 1006. Da die Steuereinheit 134' außerhalb des Gehäuses 140 angeordnet ist, wird die Steuereinheit 134' auch als externe Steuereinheit 134' bezeichnet. Diese externe Steuereinheit 134' kann beispielsweise in einem Lenker oder in einem Rahmen des Fahrrades 1000 angeordnet sein.

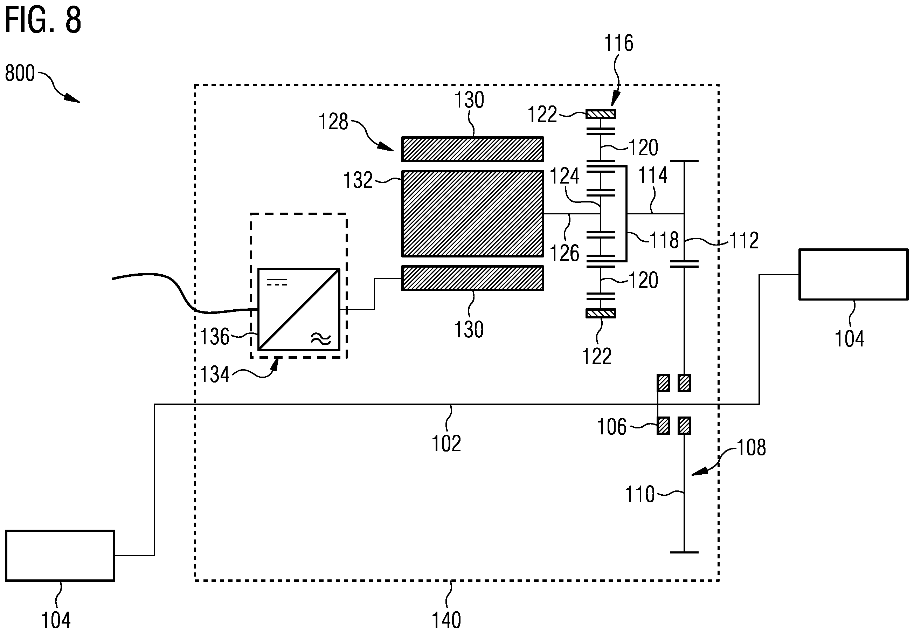

Figur 8 zeigt in schematischer Darstellung eine Stromerzeugungseinheit 800 für das Fahrrad 1000 gemäß einem achten Ausführungsbeispiel.

Die Stromerzeugungseinheit 800 gemäß Figur 8 unterscheidet sich von der Stromerzeugungseinheit 100 gemäß Figur 1 darin, dass die Stromerzeugungseinheit 100 keinen Rotationssensor aufweist. Die Steuereinheit 134 kann dazu ausgebildet sein, die Drehzahl des Rotors 132 auf Grundlage der Frequenz, der Spannung und/oder der Stromstärke der von dem elektrischen Generator 128 erzeugten Wechselspannung zu ermitteln. Auf Grundlage der ermittelten Drehzahl des Rotors 132 kann die Steuereinheit 134 dann den elektrischen Motor 1006 des Fahrrades 1000 derart ansteuern, dass die Drehzahl des elektrischen Motors 1006 proportional zu der Drehzahl des Rotors 132 ist, um ein natürliches Tretgefühl zu erzeugen.

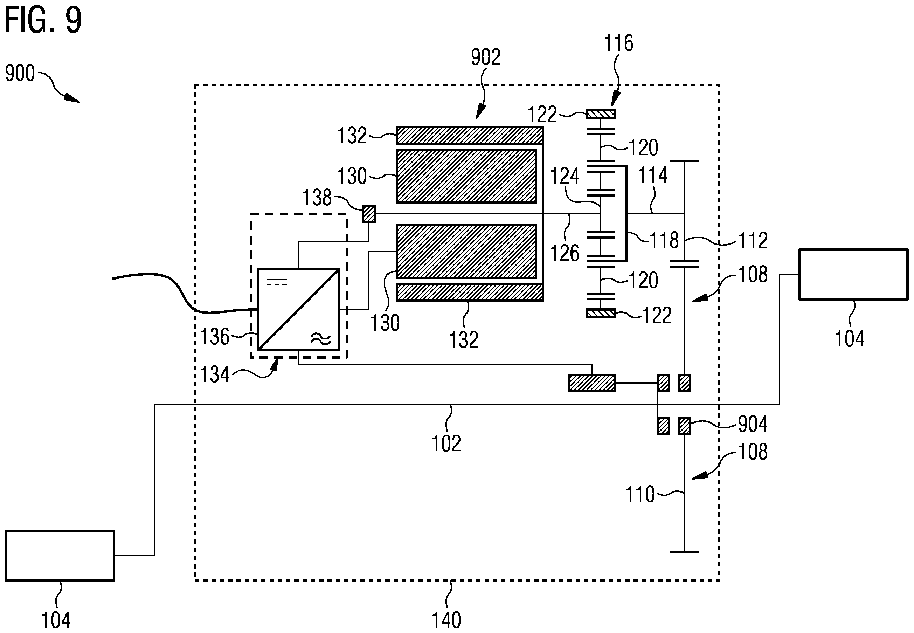

Figur 9 zeigt in schematischer Darstellung eine Stromerzeugungseinheit 900 für das Fahrrad 1000 gemäß einem neunten Ausführungsbeispiel.

Die Stromerzeugungseinheit 900 gemäß Figur 9 unterscheidet sich von der Stromerzeugungseinheit 100 gemäß Figur 1 darin, dass ein elektrischer Generator 902 als ein Außenläufer ausgebildet ist. Ferner ist eine Kupplung 904, welche die Pedalwelle 102 mit der ersten Getriebestufe 108 verbindet, als eine aktorgesteuerte Kupplung ausgebildet. Die aktorgesteuerte Kupplung 904 ist mit der Steuereinheit 134 verbunden und kann durch diese gesteuert werden, beispielsweise auf Grundlage der Rotationsgeschwindigkeit und/oder der Rotationsrichtung des Rotors 132.

Bei den anhand der Figuren 1 bis 9 beschriebenen Ausführungsbeispielen bilden zumindest die Pedalwelle 102, der elektrische Generator 128, 902 und das Getriebe 108, 116 die Stromerzeugungseinheit 100, 200, 300, 400, 500, 600, 700, 800, 900. Weitere in den Figuren 1 bis 9 gezeigte und in der vorangegangenen Beschreibung genannte Elemente und Merkmale können Teil der Stromerzeugungseinheit 100, 200, 300, 400, 500, 600, 700, 800, 900 sein.

Figur 10 zeigt in schematischer Darstellung das Fahrrad 1000 gemäß einem Ausführungsbeispiel.

Das Fahrrad 1000 ist rein beispielhaft als ein kettenloses Fahrrad mit zwei Rädern 1002, 1004 ausgebildet. Ein Hinterrad 1002 ist durch einen elektrischen Motor 1006 angetrieben. Ein Vorderrad 1004 ist über eine Lenkachse 1008 mit einer Lenkstange 1010 verbunden.

Das Fahrrad 1000 hat einen Antriebstrang 1012, der eine Stromerzeugungseinheit 1014, einen Energiespeicher 1016 und den elektrischen Motor 1006 umfasst. Die Stromerzeugungseinheit 1014 ist insbesondere eine der vorbeschriebenen Stromerzeugungseinheiten 100, 200, 300, 400, 500, 600, 700, 800, 900. Der Energiespeicher 1016 ist an einem Rahmen des Fahrrades 1000 angeordnet und umfasst insbesondere Akkumulatoren, Batterien und/oder Kondensatoren, insbesondere Superkondensator, und ist mit der Stromerzeugungseinheit 1014 elektrisch verbunden, so dass der Energiespeicher 1016 von der Stromerzeugungseinheit 1014 geladen werden kann. Der elektrische Motor 1006 ist mit der Stromerzeugungseinheit 1014 und dem Energiespeicher 1016 elektrisch verbunden. Der elektrische Motor 1006 kann somit von der Stromerzeugungseinheit 1014 und dem Energiespeicher 1016 mit elektrischer Energie versorgt werden.

Bei dem anhand der Figur 10 beschriebenen Ausführungsbeispiel bilden zumindest die Stromerzeugungseinheit 1014 und der elektrische Motor 1006 den Antriebstrang 1012. Weitere in den Figuren 1 bis 10 gezeigte und in der vorangegangenen Beschreibung genannte Elemente und Merkmale können Teil des Antriebstranges 1012 sein.

In den Figuren 1 bis 10 werden gleiche oder gleichwirkende Elemente mit denselben Bezugszeichen bezeichnet.

### Bezugszeichenliste

- 100: Stromerzeugungseinheit
- 102: Pedalwelle
- 104: Pedal
- 106: Kupplung
- 108: Getriebestufe
- 110, 112: Zahnrad
- 114: Ausgangswelle
- 116: Getriebestufe
- 118: Planetenträger
- 120: Planet
- 122: Hohlrad
- 124: Sonnenrad
- 126: Ausgangswelle
- 128: elektrischer Generator
- 130: Stator
- 132: Rotor
- 134, 134': Steuereinheit
- 136: Frequenzumrichter
- 138: Rotationssensor
- 140: Gehäuse
- 200: Stromerzeugungseinheit
- 202: Zwischenrad
- 300: Stromerzeugungseinheit
- 302,304: Zahnrad
- 400: Stromerzeugungseinheit
- 500: Stromerzeugungseinheit
- 502,504: Ritzel
- 506: Kette
- 600: Stromerzeugungseinheit
- 602: Rotationssensor
- 700: Stromerzeugungseinheit
- 800: Stromerzeugungseinheit
- 900: Stromerzeugungseinheit
- 902: elektrischer Generator
- 904: Kupplung
- 1000: Fahrrad
- 1002, 1004: Rad
- 1006: elektrischer Motor
- 1008: Lenkachse
- 1010: Lenkstange
- 1012: Antriebstrang
- 1014: Stromerzeugungseinheit
- 1016: Energiespeicher

## Patentansprüche

1. Stromerzeugungseinheit (100, 200, 300, 400, 500, 600, 700, 800, 900) für ein Fahrrad (1000), umfassend
eine Pedalwelle (102) mit Pedalen (104);
einen elektrischen Generator (128, 902) mit einem Rotor (132) und einem Stator (130), wobei die Drehachse des Rotors (132) mit Parallelversatz zu der Pedalwelle (102) angeordnet ist; und
ein Getriebe (108, 116), das dazu ausgebildet ist, Drehmoment von der Pedalwelle (102) auf den Rotor (132) des elektrischen Generators (128, 902) zu übertragen,
wobei die Stromerzeugungseinheit (100, 200, 300, 400, 500, 600, 700, 800, 900) ein Gehäuse (140) hat, das zumindest den elektrischen Generator (128, 902) und das Getriebe (108, 116) umfasst, und/oder
wobei die Drehachse des Rotors (132) mit Parallelversatz zu einem angetriebenen Rad des Fahrrades (1000) angeordnet ist.

2. Stromerzeugungseinheit (100, 200, 300, 400, 500, 600, 700, 800, 900) nach Anspruch 1, wobei das Getriebe zumindest eine erste Getriebestufe (108) umfasst, die von der Pedalwelle (102) antreibbar ist.

3. Stromerzeugungseinheit (100, 200, 300, 400, 600, 700, 800, 900) nach Anspruch 2, wobei die erste Getriebestufe (108) ein Zahnradgetriebe umfasst, insbesondere ein Stirnradgetriebe oder ein Schrägstirnradgetriebe.

4. Stromerzeugungseinheit (500) nach Anspruch 2, wobei die erste Getriebestufe (108) ein Kettengetriebe oder Riemengetriebe umfasst.

5. Stromerzeugungseinheit (100, 200, 300, 400, 500, 600, 700, 800, 900) nach einem der Ansprüche 2 bis 4, wobei das Getriebe eine zweite Getriebestufe (116) umfasst, die von der ersten Getriebestufe (108) antreibbar ist und dazu ausgebildet ist, den Rotor (132) des Generators anzutreiben.

6. Stromerzeugungseinheit (300) nach Anspruch 5, wobei die zweite Getriebestufe (116) ein Zahnradgetriebe umfasst, insbesondere ein Stirnradgetriebe oder ein Schrägstirnradgetriebe.

7. Stromerzeugungseinheit (100, 200, 400, 500, 600, 700, 800, 900) nach Anspruch 5, wobei die zweite Getriebestufe (116) ein Planetengetriebe umfasst.

8. Stromerzeugungseinheit (100, 200, 400, 500, 600, 700, 800, 900) nach Anspruch 7, wobei das Planetengetriebe einen Planetenträger (118), der von der ersten Getriebestufe (108) angetrieben ist, mindestens einen Planeten (120), ein Hohlrad (122) und ein Sonnenrad (124) umfasst, wobei das Hohlrad (122) drehfest angeordnet ist und das Sonnenrad (124) dazu ausgebildet ist, den Rotor (132) des Generators anzutreiben, oder wobei das Sonnenrad (124) drehfest angeordnet ist und das Hohlrad (122) dazu ausgebildet ist, den Rotor (132) des Generators anzutreiben.

9. Stromerzeugungseinheit (100, 200, 300, 400, 500, 600, 700, 800, 900) nach einem der vorhergehenden Ansprüche, wobei das Getriebe (108, 116) ein Übersetzungsverhältnis von kleiner als 1, bevorzugt 1/5 oder kleiner als 1/5, besonders bevorzugt 1/3 oder kleiner als 1/3, aufweist.

10. Stromerzeugungseinheit (100, 200, 300, 400, 500, 600, 700, 800, 900) nach einem der vorhergehenden Ansprüche, umfassend eine Kupplung (106, 904), die und dazu ausgebildet ist, das Getriebe (108, 116) an die Pedalwelle (102) zu kuppeln.

11. Stromerzeugungseinheit (100, 200, 300, 400, 500, 600, 700, 800, 900) nach Anspruch 10, wobei die Kupplung eine passive Kupplung (106), insbesondere ein Freilauf oder eine Ratsche, oder eine aktorgesteuerte Kupplung (904) ist.

12. Stromerzeugungseinheit (100, 200, 300, 400, 500, 600, 700, 800, 900) nach einem der vorhergehenden Ansprüche, umfassend eine Steuereinheit (134), die dazu ausgebildet ist, zumindest den elektrischen Generator (128, 902) zu steuern, und/oder verbindbar mit einer externen Steuereinheit (134'), die dazu ausgebildet ist, zumindest den elektrischen Generator (128, 902) zu steuern.

13. Stromerzeugungseinheit (100, 200, 300, 400, 500, 600, 700, 800, 900) nach Anspruch 12, umfassend zumindest einen Rotationssensor (138, 602), der derart angeordnet und dazu ausgebildet ist, eine Rotorposition, eine Rotationsgeschwindigkeit und/oder eine Rotationsrichtung des Rotors (132) des elektrischen Generators (128, 902) und/oder der Pedalwelle (102) zu messen, der Messung entsprechende Messdaten zu erzeugen und an die Steuereinheit (134) zu übermitteln.

14. Antriebsstrang (1012) für ein Fahrrad (1000) umfassend die Stromerzeugungseinheit (100, 200, 300, 400, 500, 600, 700, 800, 900) nach einem der vorhergehenden Ansprüche und einen elektrischen Motor (1006), der zumindest von der Stromerzeugungseinheit (100, 200, 300, 400, 500, 600, 700, 800, 900) antreibbar ist.

15. Fahrrad (1000), insbesondere ein kettenloses Fahrrad, umfassend den Antriebsstrang (1012) nach Anspruch 15, wobei der elektrische Motor (1006) derart angeordnet und dazu ausgebildet ist, zumindest ein Rad (1002) des Fahrrades (1000) anzutreiben.
